# EUROPÄISCHE PATENTSCHRIFT

(11) **EP 1 831 033 B1**
(45) Veröffentlichungstag und Bekanntmachung des Hinweises auf die Patenterteilung: **20.01.2010**
(21) Anmeldenummer: 05809368.3
(22) Anmeldetag: 19.11.2005
(51) Int. Cl.: B60B 17/00

(54) **GUMMIGEFEDERTES SCHIENENRAD**
RUBBER-SPRUNG RAIL WHEEL
ROUE SUR RAIL A AMORTISSEMENT ELASTIQUE

(30) Priorität: 22.12.2004 DE 102004061652
(43) Veröffentlichungstag der Anmeldung: 12.09.2007
(73) Patentinhaber: ContiTech Luftfedersysteme GmbH, 30165 Hannover (DE)
(72) Erfinder: GEDENK, Volker, 30966 Hemmingen (DE)
(74) Vertreter: Finger, Karsten
(86) Internationale Anmeldenummer: PCT/EP2005/012403
(87) Internationale Veröffentlichungsnummer: WO 2006/072278

(56) Entgegenhaltungen:
- DE-A1- 2 406 206
- DE-A1- 4 300 553
- DE-A1- 4 430 342
- DE-A1- 19 708 553
- DE-C- 594 792
- DE-C- 675 516
- US-A- 2 911 252

## Beschreibung

Die Erfindung betrifft ein gummigefedertes Schienenrad nach dem Oberbegriff des Anspruchs 1.

Gummigefederte Schienenräder dieser Art sind in diversen Ausführungen, beispielsweise aus der DE-PS 594 792, DE 32 01 499 A1, US 29 11 252 A oder DE 24 06 206 A1, bekannt.

Nachteilig an den üblicherweise im Schienenfahrzeugbau verwendeten gummigefederten Schienenrädern ist, dass diese nur maximal 1 mm in radialer Richtung einfedern. Gewünscht ist aber eine Einfederung von bis zu 5 mm unter gleicher Belastung.

Hochelastische Schienenräder mit reiner Schubbeanspruchung oder überlagerter Schub- und Druckbelastung sind ebenfalls bekannt. Aus der DE 197 08 553A1 ist beispielsweise ein Schienenrad bekannt, bei dem der Gummiring bei vertikaler Last auf Schub beansprucht wird, so dass der Gummiring eine hohe radiale Einfederung aufnimmt.

Nachteilig an den bekannten hochelastischen Schienenrädern ist aber, dass deren Dauerhaltbarkeit nicht zufrieden stellend ist. Neben der vertikalen Belastung aufgrund des Fahrzeuggewichtes wirkt zusätzlich eine laterale Querkraft auf den Gummikörper. Im statischen Zustand bewirkt diese eine kardanische Kippung des Radreifens, wobei der Drehpunkt sich ein Drittel oberhalb des Radmittelpunktes befindet. Im Fahrzustand verändert sich die Kippung laufend über dem Umfang. Dadurch entsteht eine hohe umlaufende Kantenpressung an dem äußeren Durchmesser des Rades. welche den Gummikörper bzw. - ring in relativ kurzer Zeit zerstört.

Um die Kantenpressung zu verringern, hat es sich als vorteilhaft erwiesen, die Wandstärke der Gummiringe zu vergrößern. Dies ist jedoch bei kleinen Rädern, wie sie bei Straßenbahnen eingesetzt werden, nicht ausreichend möglich. Nachteilig ist außerdem, dass die Ringe durch die größeren Wandstärken mit den technisch nutzbaren Gummihärten zu stark einfedern. Die starke Einfederung lässt sich durch Überlagerung von Schub- und Druckbelastung im Gummikörper, beispielsweise durch Schrägstellung der Gummiringe, ausgleichen, wobei jedoch die Kantenpressung wieder erhöht wird und die Lebensdauer der Gummikörper sich wieder verschlechtert. Einer durchgehend konischen Gestaltung der Gummiringe steht entgegen, dass der Einbauraum für eine überall ausreichende Wandstärke meist nicht ausreicht.

Für die Einfederung ist es also vorteilhaft, eine geringe Wandstärke der Gummiringe zu haben, für die Kantenpressung soll die Wandstärke aber möglichst groß sein.

Der Erfindung liegt daher die Aufgabe zugrunde, ein Schienenrad der eingangs genannten Art derart weiterzuentwickeln, dass es unter Beibehaltung der hochelastischen Eigenschaften eine verbesserte Lebensdauer aufweist.

Diese Aufgabe wird bei einem gummigefederten Schienenrad nach dem Oberbegriff des Anspruchs 1 dadurch gelöst, dass das Schienenrad mindestens einen Gummiring aufweist, der am inneren und äußeren Durchmesser jeweils einen konisch aufgeweiteten Bereich und zwischen den aufgeweiteten Bereichen einen Bereich mit gleichbleibender Wandstärke aufweist.

Weiterbildungen und vorteilhafte Ausgestaltungen der Erfindung ergeben sich aus den Unteransprüchen.

Durch die Anordnung der Gummiringe schräg zur Mittelebene des Steges wird eine steifere Ausbildung der Schienenräder erreicht. Gleichzeitig ist durch die konische Aufweitung eine geringere Kantenpressung erreichbar.

Durch die konische Aufweitung der Gummiringe besteht die Möglichkeit, die Wandstärke der Gummiringe partiell zu vergrößern, um so eine Verringerung der Kantenpressung zu erreichen. Die mit der Vergrößerung der Wandstärke eines Gummiringes verbundenen Nachteile, nämlich dass die Gummiringe bei den überhaupt technisch nutzbaren Gummihärten mit zunehmender Wandstärke zu weich werden und sich dadurch die Lebensdauer dieser Gummiringe verringert, werden jedenfalls teilweise kompensiert. Dadurch wird die Abfederung von Stößen und Schlägen, die von der Fahrbahnseite auf das Schienenrad einwirken, gegenüber dem Stand der Technik wesentlich verbessert.

Eine Weiterbildung der Erfmdung sieht vor, dass der Steg ausgehend von der Innenseite des Radreifens einen in Richtung der Außenseite der Radfelge sich verjüngenden Querschnitt aufweist und/oder die Schenkel ausgehend von der Außenseite der Radfelge einen in Richtung der Innenseite des Radreifens sich verjüngenden Querschnitt aufweisen.

Eine vorteilhafte Ausgestaltung der Erfindung sieht vor, dass der Steg, die Schenkel und die Gummiringe derart ausgebildet sind, dass umlaufende und mit den Stirnkanten abschließende Bereiche der Gummiringe einen in Richtung ihrer Stirnkanten sich erweiternden Querschnitt aufweisen.

Durch diese Konturoptimierung der Gummiringe wird eine wesentlich größere Vertikalsteifigkeit und gleichzeitig eine wesentlich geringere Kantenpressung erreicht

Insbesondere bei kleinen Schienenrädern, die beispielsweise im Straßenbahnbau verwendet werden, ist eine zur Verringerung der Kantenpressung gewünschte Vergrößerung der Wandstärke über den gesamten Gummiring nicht möglich. Durch die erfindungsgemäße Ausgestaltung der Gummiringe wird nunmehr auch bei diesen Schienenrädern eine wesentliche Verringerung der Kantenpressung erreicht.

Eine Vergrößerung der Wandstärke über den gesamten Gummiring hätte darüber hinaus den Nachteil, dass die Gummiringe bei den überhaupt technisch nutzbaren Gummihärten zu weich werden und mithin die Lebensdauer dieser Gummiringe ebenfalls sinken würde.

Vorteilhaft wird bei der erfindungsgemäße Ausgestaltung eine geringere Belastung der Gummiringe durch eine kombinierte Druck- und Schubüberlagerung und eine größere dynamische Tüchtigkeit und mithin eine längere Lebensdauer der Gummiringe erhalten.

Vorzugsweise entspricht der Querschnitt des Steges im Wesentlichen dem Querschnitt eines Obelisken und der Querschnitt der Schenkel im Wesentlichen dem Querschnitt einer Hälfte eines in Längsrichtung geteilten Obelisken, wobei die Spitze des Obelisken vorzugsweise abgeflacht ist.

Weiterhin ist vorgesehen, dass die Schenkel und die Gummiringe spiegelsymmetrisch zur Mittelebene des Steges angeordnet sind. Dadurch ist eine entsprechend symmetrische hohe Axialsteifigkeit des Schienenrades gegeben.

Zweckmäßigerweise sind in einer Weiterbildung der Erfindung die Gummiringe am Steg des Radreifens anvulkansiert.

Dadurch wird eine wesentliche Erleichterung bei der Montage der erfmdungsgemäßen Schienenräder erreicht und gleichzeitig eine genaue Positionierung der Gummiringe im Schienenrad festgelegt und sichergestellt. Eine gleich bleibende Qualität der hergestellten Schienenräder ist gewährleistet.

Vorteilhaft sind der eine Schenkel der Radfelge durch eine Radscheibe und der andere Schenkel der Radfelge durch einen Felgenring gebildet, wobei der Felgenring lösbar auf der Radscheibe befestigt ist.

Dadurch lassen sich auch die zwischen Steg und den Schenkeln angeordneten Gummiringe unter Vorspannung montieren.

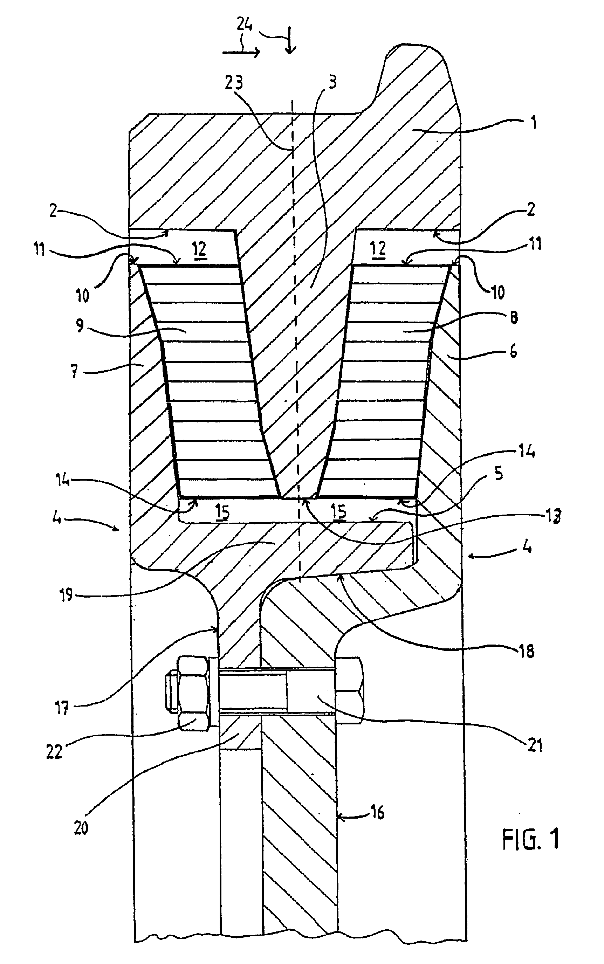

Nachfolgend wird die Erfindung anhand eines Ausführungsbeispiels erläutert, das in der Zeichnung dargestellt ist. In dieser zeigt die einzige Fig. 1 einen Radialschnitt des erfindungsgemäßen Schienenrades im Ausschnitt.

Das erfindungsgemäße gummigefederte Schienenrad umfasst einen Radreifen 1, der auf seiner Innenseite 2 einen umlaufenden Steg 3 aufweist, und eine Radfelge 4, die auf ihrer Außenseite 5 zwei Schenkel 6, 7 aufweist.

Der eine Schenkel 6 der Radfelge 4 ist hierbei durch eine Radscheibe 16 und der andere Schenkel 7 der Radfelge 4 durch einen Felgenring 17 gebildet, wobei der Felgenring 17 lösbar auf der Radscheibe 16 befestigt ist.

Der Schenkel 6 ist an der Radscheibe 16 unter Ausbildung einer sich in axialer Richtung erstreckenden Auflagefläche 18 für einen quasi die Außenseite 5 der Radfelge 4 bildenden, umlaufenden Ansatz 19 des Felgenringes 17 ausgebildet. Die Radfelge 4 wird demnach von den Schenkeln 6, 7 sowie von dem umlaufenden Ansatz 19 gebildet.

Zwischen dem Radreifen 1 und der Radfelge 4 sind zwei Gummiringe 8, 9 vorgesehen, die auf beiden Seiten des Steges 3 angeordnet und von den Schenkeln 6, 7 der Radfelge 4 seitlich begrenzt sind.

Zwischen der Innenseite 2 des Radreifens 1 und den Stirnkanten 10, 11 der Schenkel 6, 7 und Gummiringe 8, 9 ist ein erster Zwischenraum 12 und zwischen der Außenseite 5 der Radfelge 4 und den Stirnkanten 13, 14 des Steges 3 und der Gummiringe 8, 9 ein zweiter Zwischenraum 15 ausgebildet.

In die genannten Zwischenräume 12, 15 können sich die Gummiringe 8, 9 bei auftretenden Belastungen hinein verformen.

Der Felgenring 17 und der umlaufende Ansatz 19 laufen in radialer Richtung in einen scheibenförmigen Flansch 20 aus, der Bohrungen aufweist, die mit Bohrungen der Radscheibe 16 zur Deckung gebracht werden. Hindurchgeführte Schraubbolzen 21 mit Muttern 22 bilden die lösbare Verbindung zwischen dem Felgenring 17 und der Radscheibe 16.

Erfindungsgemäß weist der Steg 3 ausgehend von der Innenseite 2 des Radreifens 1 einen in Richtung der Außenseite 5 bzw. des Ansatzes 19 der Radfelge 4 sich verjüngenden Querschnitt auf, und die Schenkel 6, 7 weisen ausgehend von der Außenseite 5 bzw. vom Ansatz 19 der Radfelge 4 einen in Richtung der Innenseite 2 des Radreifens 1 sich verjüngenden Querschnitt auf. Hierbei entspricht der Querschnitt des Steges 2 im Wesentlichen dem Querschnitt eines Obelisken, und der Querschnitt der Schenkel 6, 7 entspricht im Wesentlichen dem Querschnitt einer Hälfte eines in Längsrichtung geteilten Obelisken. Hierdurch wird erreicht, dass die Gummiringe 8, 9 schräg zur Mittelebene 23 des Steges 3 angeordnet sind.

Umlaufende und mit den Stirnkanten 11, 14 abschließende Bereiche der Gummiringe 8, 9 weisen einen in Richtung der Stirnkanten 11, 14 sich erweiternden Querschnitt auf.

Die Schenkel 6, 7 und die Gummiringe 8, 9 sind spiegelsymmetrisch zur Mittelebene 23 des Steges 3 angeordnet.

Die Höhe des Steges 3 ist so bemessen, dass zwischen seiner Stirnkante 13 und der ihr zugewandten Außenseite 5 des umlaufenden Ansatzes 19 ein Abstand eingehalten ist, der größer ist als der Abstand zwischen den Stirnkanten 10 der Schenkel 6, 7 und der Innenseite 2 des Radreifens 1. Hierdurch wird erreicht, dass bei extrem hohen radialen Belastungen, bei denen die Stirnkanten 10 der Schenkel 6, 7 auf der Innenseite 2 des Radreifens 1 aufstehen, stets ein Ringspalt zwischen der Stirnkante 13 und dem ihr gegenüberliegenden Außenseite 5 des Ansatzes 19 verbleibt.

### Bezugszeichenliste

### (ist Bestandteil der Beschreibung)

- 1: Radreifen
- 2: Innenseite
- 3: Steg
- 4: Radfelge
- 5: Außenseite
- 6: Schenkel
- 7: Schenkel
- 8: Gummiring
- 9: Gummiring
- 10: Stirnkanten der Schenkel
- 11: äußeren Stirnkanten der Gummiringe
- 12: erster Zwischenraum
- 13: Stirnkante des Steges
- 14: inneren Stirnkanten der Gummiringe
- 15: zweiter Zwischenraum
- 16: Radscheibe
- 17: Felgenring
- 18: Auflagefläche
- 19: Ansatz
- 20: Flansch
- 21: Schraubbolzen
- 22: Mutter
- 23: Mittelebene
- 24: Belastungsrichtungen

## Patentansprüche

1. Gummigefedertes Schienenrad mit einem Radreifen (1), der auf seiner Innenseite (2) einen umlaufenden Steg (3) aufweist, und mit einer Radfelge (4), die auf ihrer Außenseite (5) zwei Schenkel (6, 7) aufweist, sowie mit zwei zwischen dem Radreifen (1) und der Radfelge (4) angeordneten Gummiringen (8, 9), die auf beiden Seiten des Steges (3) angeordnet und von den Schenkeln (6, 7) seitlich begrenzt sind, wobei zwischen der Innenseite (2) des Radreifens (1) und den Stirnkanten (10, 11) der Schenkel (6, 7) und Gummiringe (8, 9) ein erster Zwischenraum (12) und zwischen der Außenseite (5) der Radfelge (4) und den Stirnkanten (13, 14) des Steges (3) und der Gummiringe (8, 9) ein zweiter Zwischenraum (15) ausgebildet ist, und dass der Steg (3) und die Schenkel (6, 7) derart ausgebildet sind, dass die Gummiringe (8, 9) schräg zur Mittelebene (23) des Steges (3) angeordnet sind, **dadurch gekennzeichnet, dass** das Schienenrad mindestens einen Gummiring (8, 9) aufweist, der am inneren (14) und äußeren Durchmesser (11) jeweils einen konisch aufgeweiteten Bereich und zwischen den aufgeweiteten Bereichen einen Bereich mit gleichbleibender Wandstärke aufweist.

2. Gummigefedertes Schienenrad nach Anspruch 1, **dadurch gekennzeichnet, dass** der Steg (3) ausgehend von der Innenseite (2) des Radreifens (1) einen in Richtung der Außenseite (5) der Radfelge (4) sich verjüngenden Querschnitt aufweist und/oder die Schenkel (6, 7) ausgehend von der Außenseite (5) der Radfelge (4) einen in Richtung der Innenseite (2) des Radreifens (1) sich verjüngenden Querschnitt aufweisen.

3. Gummigefedertes Schienenrad nach Anspruch 1 oder 2, **dadurch gekennzeichnet, dass** der Steg (3), die Schenkel (6, 7) und die Gummiringe (8, 9) derart ausgebildet sind, dass umlaufende und mit den Stirnkanten (11, 14) abschließende Bereiche der Gummiringe (8, 9) einen in Richtung der Stirnkanten (11, 14) sich erweiternden Querschnitt aufweisen.

4. Gummigefedertes Schienenrad nach Anspruch 3, **dadurch gekennzeichnet, dass** der Querschnitt des Steges (2) im Wesentlichen dem Querschnitt eines Obelisken und der Querschnitt der Schenkel (6, 7) im Wesentlichen dem Querschnitt einer Hälfte eines in Längsrichtung geteilten Obelisken entspricht.

5. Gummigefedertes Schienenrad nach einem der Ansprüche 1 bis 4, **dadurch gekennzeichnet, dass** die Schenkel (6, 7) und die Gummiringe (8, 9) spiegelsymmetrisch zur Mittelebene (23) des Steges (3) angeordnet sind.

6. Gummigefedertes Schienenrad nach einem der Ansprüche 1 bis 5, **dadurch gekennzeichnet, dass** die Gummiringe (8, 9) am Steg (3) des Radreifens (1) anvulkansiert sind.

7. Gummigefedertes Schienenrad nach einem der Ansprüche 1 bis 6, **dadurch gekennzeichnet, dass** der eine Schenkel (6) der Radfelge (4) durch eine Radscheibe (16) und der andere Schenkel (7) der Radfelge (4) durch einen Felgenring (17) gebildet sind, wobei der Felgenring (17) lösbar auf der Radscheibe (16) befestigt ist.

## Claims

1. Rubber-sprung rail wheel comprising a wheel tire (1), which has a peripheral web (3) on its inner side (2), and comprising a wheel rim (4), which has two legs (6, 7) on its outer side (5), and also comprising two rubber rings (8, 9), which are arranged between the wheel tire (1) and the wheel rim (4), on both sides of the web (3), and are laterally delimited by the legs (6, 7), wherein a first intermediate space (12) is formed between the inner side (2) of the wheel tire (1) and the end edges (10, 11) of the legs (6, 7) and rubber rings (8, 9) and a second intermediate space (15) is formed between the outer side (5) of the wheel rim (4) and the end edges (13, 14) of the web (3) and the rubber rings (8, 9), and wherein the web (3) and the legs (6, 7) are formed in such a way that the rubber rings (8, 9) are arranged such that they are inclined in relation to the centre plane (23) of the web (3), **characterized in that** the rail wheel has at least one rubber ring (8, 9), which has a conically widened region on the inner diameter (14) and the outer diameter (11), respectively, and has a region of constant wall thickness between the widened regions.

2. Rubber-sprung rail wheel according to Claim 1, **characterized in that** the web (3) has a cross section that narrows from the inner side (2) of the wheel tire (1) in the direction of the outer side (5) of the wheel rim (4) and/or the legs (6, 7) have a cross section that narrows from the outer side (5) of the wheel rim (4) in the direction of the inner side (2) of the wheel tire (1).

3. Rubber-sprung rail wheel according to Claim 1 or 2, **characterized in that** the web (3), the legs (6, 7) and the rubber rings (8, 9) are formed in such a way that peripheral regions of the rubber rings (8, 9) that end with the end edges (11, 14) have a cross section that widens in the direction of the end edges (11, 14).

4. Rubber-sprung rail wheel according to Claim 3, **characterized in that** the cross section of the web (3) corresponds substantially to the cross section of an obelisk and the cross section of the legs (6, 7) corresponds substantially to the cross section of half an obelisk divided in the longitudinal direction.

5. Rubber-sprung rail wheel according to one of Claims 1 to 4, **characterized in that** the legs (6, 7) and the rubber rings (8, 9) are arranged mirror-symmetrically in relation to the centre plane (23) of the web (3).

6. Rubber-sprung rail wheel according to one of Claims 1 to 5, **characterized in that** the rubber rings (8, 9) are vulcanized to the web (3) of the wheel tire (1).

7. Rubber-sprung rail wheel according to one of Claims 1 to 6, **characterized in that** the one leg (6) of the wheel rim (4) is formed by a wheel disc (16) and the other leg (7) of the wheel rim (4) is formed by a rim ring (17), wherein the rim ring (17) is detachably fastened on the wheel disc (16).

## Revendications

1. Roue ferroviaire amortie par caoutchouc, qui présente un bandage (1) de roue doté sur son côté intérieur (2) d'une nervure périphérique (3), une jante (4) de roue dotée sur son côté extérieur (5) de deux ailes (6, 7) ainsi que deux anneaux en caoutchouc (8, 9) disposés entre le bandage (1) de roue et la jante (4) de roue, disposés sur les deux côtés de la nervure (3) et délimités latéralement par les ailes (6, 7),
un premier espace intermédiaire (12) étant formé entre le côté intérieur (2) du bandage (1) de roue, les bords frontaux (10, 11) des ailes (6, 7) et les anneaux en caoutchouc (8, 9), et un deuxième espace intermédiaire (15) étant formé entre le côté extérieur (5) de la jante (4) de roue, les bords frontaux (13, 14) de la nervure (3) et les anneaux en caoutchouc (8, 9),
la nervure (3) et les ailes (6, 7) étant configurées de telle sorte que les anneaux en caoutchouc (8, 9) soient disposés obliquement par rapport au plan central (23) de la nervure (3),
**caractérisée en ce que**
la roue ferroviaire présente au moins un anneau en caoutchouc (8, 9) qui présente sur son diamètre intérieur (14) et sur son diamètre extérieur (11) une partie évasée coniquement et entre les parties évasées une partie dont l'épaisseur de paroi est constante.

2. Roue ferroviaire amortie par caoutchouc selon la revendication 1, **caractérisée en ce que** la nervure (3) présente, partant du côté intérieur (2) du bandage (1) de roue, une section transversale qui se rétrécit en direction du côté extérieur (5) de la jante (4) de roue et/ou **en ce que** les ailes (6, 7) présentent, partant du côté extérieur (5) de la jante de roue (4), une section transversale qui se rétrécit en direction du côté intérieur (2) du bandage (1) de roue.

3. Roue ferroviaire amortie par caoutchouc selon les revendications 1 ou 2, **caractérisée en ce que** la nervure (3), les ailes (6, 7) et les anneaux en caoutchouc (8, 9) sont configurés de telle sorte que les parties périphériques des anneaux en caoutchouc (8, 9), qui se raccordent aux bords frontaux (11, 14), présentent une section transversale qui s'évase en direction des bords frontaux (11, 14).

4. Roue ferroviaire amortie par caoutchouc selon la revendication 3, **caractérisée en ce que** la section transversale de la nervure (2) correspond essentiellement à la section transversale d'un obélisque et **en ce que** la section transversale des ailes (6, 7) correspond essentiellement à la section transversale de la moitié d'un obélisque divisé dans le sens de sa longueur.

5. Roue ferroviaire amortie par caoutchouc selon l'une des revendications 1 à 4, **caractérisée en ce que** les ailes (6, 7) et les anneaux en caoutchouc (8, 9) sont disposés à symétrie spéculaire par rapport au plan central (23) de la nervure (3).

6. Roue ferroviaire amortie par caoutchouc selon l'une des revendications 1 à 5, **caractérisée en ce que** les anneaux de caoutchouc (8, 9) sont vulcanisés sur la nervure (3) du bandage (1) de roue.

7. Roue ferroviaire amortie par caoutchouc selon l'une des revendications 1 à 6, **caractérisée en ce qu'**une des ailes (6) de la jante (4) de roue est formée par un disque de roue (16) et l'autre aile (7) de la jante (4) de roue par un anneau de jante (17), l'anneau de jante (17) étant fixé de manière libérable sur le disque de roue (16).
